# EUROPEAN PATENT APPLICATION

(11) **EP 4 372 875 A1**
(43) Date of publication of application: **22.05.2024**
(21) Application number: 23208130.7
(22) Date of filing: 07.11.2023
(51) Int. Cl.: H01M 50/147, H01M 50/30, H01M 50/342

(54) **COVER ASSEMBLY, BATTERY AND ELECTRONIC DEVICE**

(30) Priority: 17.11.2022 CN 202223061223 U
(71) Applicant: AESC Japan Ltd., Kanagawa, 2520012 (JP)
(72) Inventor: WU, Changjun, Pudong New Area Shanghai, 201315 (CN); CUI, Xin, Pudong New Area Shanghai, 201315 (CN); YUAN, Zhuchen, Pudong New Area Shanghai, 201315 (CN); CHEN, Zhuolie, Pudong New Area Shanghai, 201315 (CN); HE, Yafei, Pudong New Area Shanghai, 201315 (CN)
(74) Representative: Becker, Eberhard

(57) **Abstract**

A cover assembly (10), a battery (1) and an electronic device are provided. The cover assembly (10) includes a cover body (11), a boss (12), and a heat-resistant sheet (13). A pressure relief hole (111) is provided on the cover body (11). The boss (12) is disposed on the top surface of the cover body (11), and surrounds the outer periphery of the pressure relief hole (111). The boss (12) encloses a first region (121) communicated with the pressure relief hole (111), and together with the pressure relief hole (111) constitute an accommodation space. The heat-resistant sheet (13) is disposed in the accommodation space and at least partially covers the pressure relief hole (111).

## Description

### BACKGROUND

### Technical Field

The disclosure relates to the technical field of batteries, in particular to a cover assembly, a battery and an electronic device.

### Description of Related Art

In recent years, the rapid rise of new energy vehicles has significantly facilitated sustainable development of society and the harmonious coexistence of human beings and the environment. Among various conceptual new energy vehicles, it is already achievable to put electric vehicles into mass production technically, and electric vehicles have received more and more attention and become favorable with the support of the government. As a solution to energy and environmental issues, the key technology of electric vehicles is the rechargeable battery assembly that replaces gasoline fuel engines as the power source.

When in use, a plurality of batteries are connected in series or in parallel to form a part of a battery pack. A pressure relief hole is provided on the cover assembly of each battery, and a boss is provided on the outer circumference of the pressure relief hole. When the battery undergoes thermal runaway, the battery will emit high-temperature gas and high-temperature substances, and the high-temperature gas and high-temperature substances will return into the pressure relief hole of the adjacent battery. In order to prevent such accidents, a heat-resistant sheet is now configured to cover the pressure relief hole of the cover assembly of the battery and is connected to the top portion of the boss. Due to the small area of the top portion of the boss, the contact area between the heat-resistant sheet and the boss is small, and the connection is unstable. If there is a high-pressure airflow blowing through the side surface, the heat-resistant sheet is likely to fall, which will affect the safety performance of the battery.

### SUMMARY

The purpose of the disclosure is to provide a cover assembly, a battery and an electronic device, so that the heat-resistant sheet is not easily to fall off, while the safety of the battery is ensured.

In order to solve the above technical problems, the embodiment of the disclosure provides a cover assembly includes a cover body, a boss and a heat-resistant sheet. A pressure relief hole is provided on the cover body. The boss is disposed on the top surface of the cover body, and surrounds the outer periphery of the pressure relief hole. The boss encloses a first region, wherein the first region communicates with the pressure relief hole, and together with the pressure relief hole constitute an accommodation space. The heat-resistant sheet is disposed in the accommodation space and at least partially covers the pressure relief hole.

Compared with the related art, the embodiments of the disclosure provide the heat-resistant sheet in the accommodation space and covers the pressure relief hole. The heat-resistant sheet covers an appropriate area and does not have too much connection area with the cover body, so that the battery is able to release pressure smoothly, that is, meeting the requirements of opening the valve smoothly for battery which undergoes thermal runaway, while it is possible to block the high-temperature gas and high-temperature substances falling from other batteries. In addition, the heat-resistant sheet is placed in the accommodation space and will not fall due to the airflow coming from the side surface. In this way, the heat-resistant sheet has been covering the pressure relief hole to ensure the safety performance of the battery.

In an embodiment, the heat-resistant sheet is disposed in the first region.

In an embodiment, the bottom edge of the inner side wall of the boss is flush with the top edge of the inner side wall of the pressure relief hole.

In an embodiment, the boss is spaced apart from the edge of the pressure relief hole, and the heat-resistant sheet is fixed to a part of the cover body surrounded by the boss.

In an embodiment, the distance between the edge of the pressure relief hole and the boss is 1 mm to 5 mm.

In an embodiment, the boss has an inner side wall surrounding the outer periphery of the pressure relief hole, and the heat-resistant sheet is spaced apart from the inner side wall of the boss.

In an embodiment, the heat-resistant sheet is fixed to the inner side wall of the boss.

In an embodiment, the inner side wall of the boss further has a position-limiting portion extending toward the first region; and an area of an orthographic projection of the position-limiting portion along the thickness direction of the cover body in the pressure relief hole is smaller than the area of the pressure relief hole, and the heat-resistant sheet is located below the position-limiting portion.

In an embodiment, at least a part of the heat-resistant sheet is located in the pressure relief hole.

In an embodiment, the cover assembly further includes: an explosion-proof sheet disposed on the cover body, and the explosion-proof sheet covers the pressure relief hole, and the heat-resistant sheet is connected with the top surface of the explosion-proof sheet.

In an embodiment, the explosion-proof sheet is disposed on the bottom surface of the cover body, and the heat-resistant sheet is disposed in the pressure relief hole.

In an embodiment, the inner side wall of the boss further has a position-limiting portion extending toward the first region; and an area of an orthographic projection of the position-limiting portion along the thickness direction of the cover body in the pressure relief hole is smaller than an area of the pressure relief hole, the heat-resistant sheet is clamped between the position-limiting portion and the explosion-proof sheet.

In an embodiment, the cover assembly further includes: a protection film, the protection film is disposed above the heat-resistant sheet, and the protection film covers the region surrounded by the boss.

In an embodiment, the protection film is fixed to the top surface of the boss.

In an embodiment, the region where the heat-resistant sheet covers the pressure relief hole is further provided with a ventilating portion.

In an embodiment, the heat-resistant sheet is one of glass fiber, mica, ceramic and ceramic rubber.

An embodiment of the present disclosure further provides a battery including a cover assembly as described in any one of the above embodiments; a housing having an opening closed by the cover assembly; and a battery cell which is disposed in the housing.

An embodiment of the present disclosure also provides an electronic device including the above-mentioned battery.

### BRIEF DESCRIPTION OF THE DRAWINGS

FIG. 1 is a schematic structural view of a battery in an embodiment of the disclosure.
FIG. 2 is a schematic structural view of a housing in an embodiment of the present disclosure.
FIG. 3 is an exploded view of a cover assembly in an embodiment of the present disclosure.
FIG. 4 is a schematic structural view of a cover body in an embodiment of the present disclosure.
FIG. 5 is a schematic structural view of a battery in an embodiment of the present disclosure.
FIG. 6 is a sectional view along the section line "A-A" in FIG. 5.
FIG. 7 is a partially enlarged view of A in FIG. 6.
FIG. 8 is a cross-sectional view of a battery in another embodiment of the present disclosure.
FIG. 9 is a partially enlarged view of B in FIG. 8.
FIG. 10 is an exploded view of a cover assembly in another embodiment of the present disclosure.

### DESCRIPTION OF THE EMBODIMENTS

In order to make the purpose, technical solutions and advantages of the present disclosure clearer, various implementation modes of the present disclosure will be described in detail below in conjunction with the accompanying drawings. However, those of ordinary skill in the art can understand that in each implementation manner of the present disclosure, many technical details are proposed in order to enable readers to better understand the present application. However, even without these technical details and various changes and modifications based on the following embodiments, the technical solution claimed in each claim of the present application may be realized.

Unless the context requires otherwise, throughout the specification and claims, the word "comprise" and variations thereof, such as "comprising" and "having" are to be read in an open, inclusive sense, i.e., "including, but not limited to".

Various embodiments of the disclosure will be described in detail below in conjunction with the accompanying drawings, so as to better understand the purpose, features and advantages of the disclosure. It should be understood that the embodiments shown in the accompanying drawings are not intended to limit the scope of the disclosure, but only to illustrate the spirit of the technical solution of the disclosure.

Reference throughout this specification to "one embodiment" or "an embodiment" means that a particular feature, structure, or characteristic described in connection with the embodiments is included in at least one embodiment. Thus, recitation of "in one embodiment" or "in an embodiment" in various places throughout the specification are not necessarily all referring to the same embodiment. In addition, particular features, structures or characteristics may be combined in any manner in one or more embodiments.

As used in this specification and the appended claims, the singular forms "a" and "the" include plural referents unless the context clearly dictates otherwise. It should be noted that the term "or" is generally employed in its sense including "and/or" unless the context clearly dictates otherwise.

In the following description, in order to clearly demonstrate the structure and operation method of the disclosure, many directional words will be used for description. However, terms such as "front", "rear", "left", "right", "outer", "inner", "outward", "inward", "upper", "lower" should be understood for the convenience of description, and should not be construed as a limiting term.

Embodiments of the disclosure are described below with reference to the accompanying drawings.

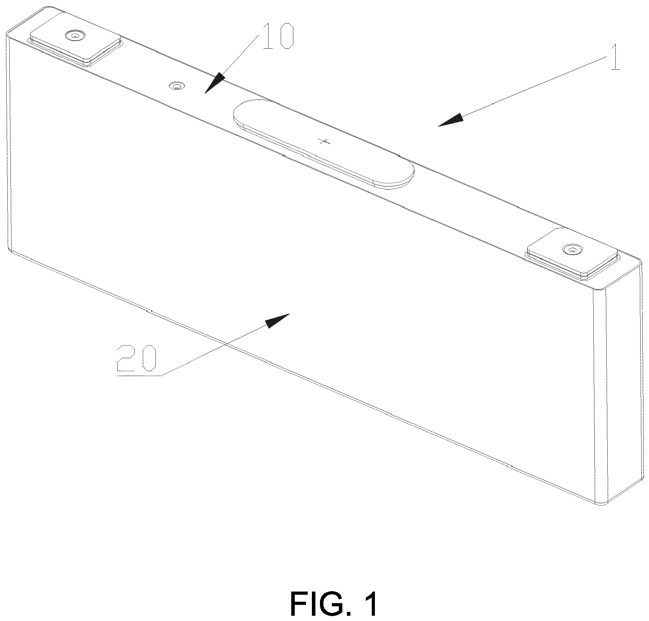

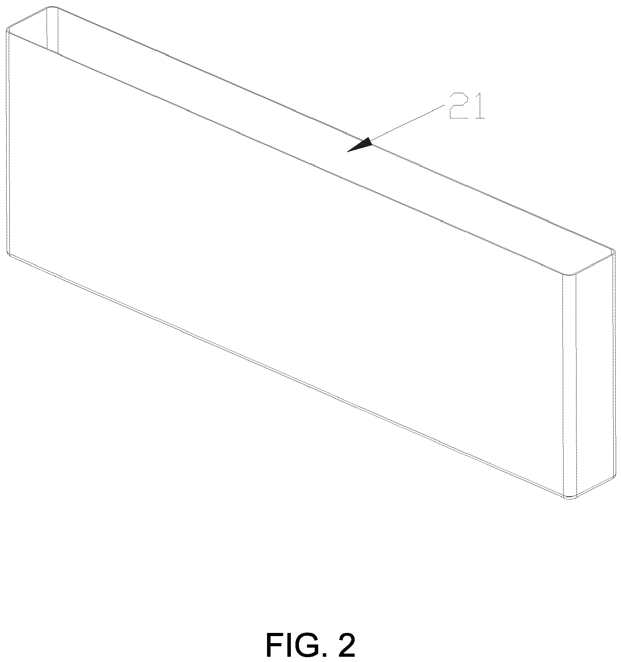

An embodiment of the present disclosure provides an electronic device including a battery 1 as shown in FIG. 1. The battery 1 includes a cover assembly 10, a housing 20 and a battery cell. As shown in FIG. 2, the housing 20 has an opening 21, and the opening 21 is closed by the cover assembly 10. The battery cell is disposed in the housing 20. In this embodiment, it is shown that the housing 20 is in the shape of a rectangular box, and the cover assembly 10 is adaptively set in a strip shape. Those skilled in the art should understand that when the housing 20 has other shapes, the cover assembly 10 may also have other shapes accordingly, as long as the cover assembly 10 is able to seal the opening 21 of the housing 20. It should be noted that, when the housing 20 is in the shape of a rectangular box, openings 21 may also be provided at both ends in the length direction, and the cover assembly 10 may cover the openings 21 at both ends. The electronic device may be an electric car or an electric motorcycle or the like.

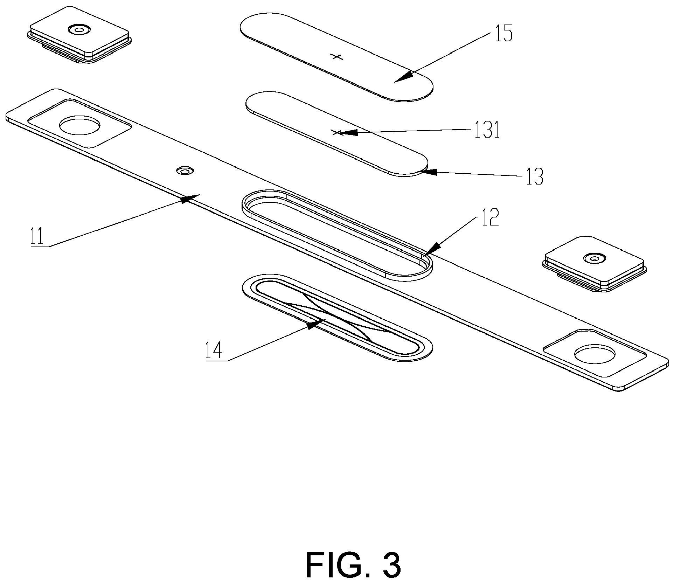

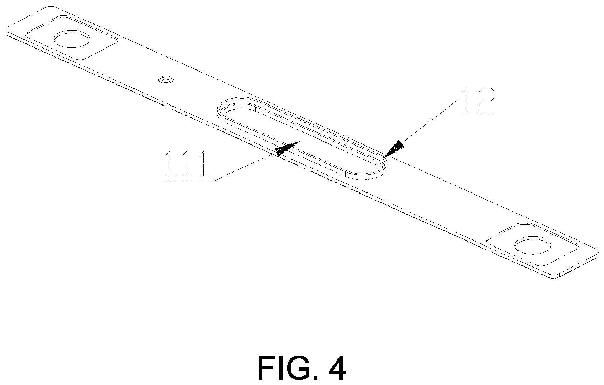

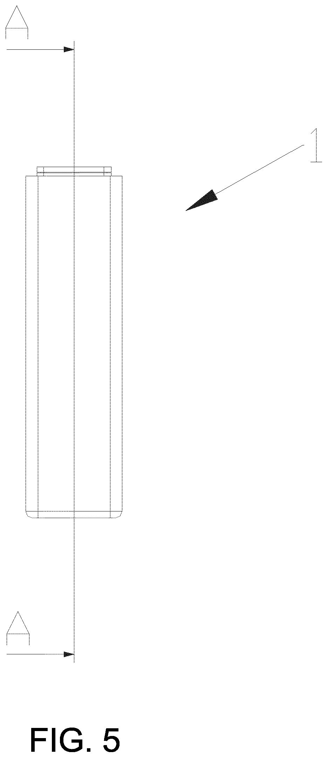

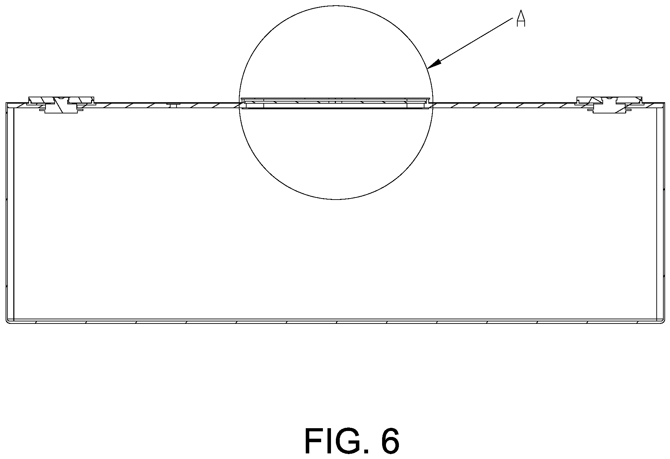

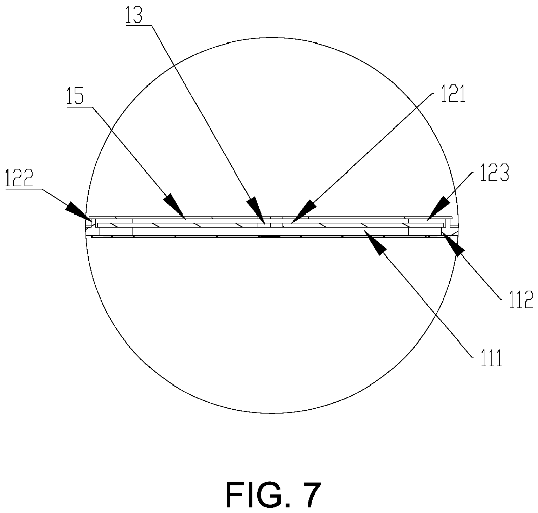

Specifically, as shown in FIG. 3, the cover assembly 10 includes a cover body 11, a boss 12 and a heat-resistant sheet 13. As shown in FIG. 4, a pressure relief hole 111 is provided on the cover body 11, and the battery further includes an explosion-proof sheet 14 disposed at the pressure relief hole 111. FIG. 6 is a sectional view of the battery 1 shown in FIG. 5 along the section line "A-A", and FIG. 7 shows a partially enlarged view of the pressure relief hole 111 in FIG. 6. As shown in FIG. 7, the boss 12 is disposed on the top surface of the cover body 11 and surrounds the outer periphery of the pressure relief hole 111. The boss 12 encloses a first region 121, that is, the first region 121 is a space enclosed by the boss 12 between the top surface of the cover body 11 and the top surface of the boss 12. The first region 121 communicates with the pressure relief hole 111, and together with the pressure relief hole 111 constitute an accommodation space. The heat-resistant sheet 13 is disposed in the accommodation space and partially covers the pressure relief hole 111.

It can be seen from the above content that the heat-resistant sheet is placed in the accommodation space and covers the pressure relief hole. The heat-resistant sheet covers an appropriate area and does not have too much connection area with the cover body, so that the battery is able to release the pressure smoothly when releasing the pressure, that is, meeting the requirements of opening the valve smoothly for battery which undergoes thermal runaway, while it is possible to block the high-temperature gas and high-temperature substances falling from other batteries. In addition, the heat-resistant sheet is placed in the accommodation space and will not fall due to the airflow coming from the side surface. In this way, the heat-resistant sheet has been covering the pressure relief hole to ensure the safety performance of the battery.

The battery 1 in an embodiment of the present disclosure includes a cover assembly 10, a housing 20 and a battery cell. As shown in FIG. 2, the housing 20 has an opening 21, and the opening 21 is closed by the cover assembly 10. The battery cell is disposed in the housing 20. In this embodiment, it is shown that the housing 20 is in the shape of a rectangular box, and the cover assembly 10 is adaptively set in a strip shape. Those skilled in the art should understand that when the housing 20 has other shapes, the cover assembly 10 may also have other shapes accordingly, as long as the cover assembly 10 is able to seal the opening 21 of the housing 20. It should be noted that, when the housing 20 is in the shape of a rectangular box, openings 21 may also be provided at both ends in the length direction, and the cover assembly 10 may cover the openings 21 at both ends.

Specifically, as shown in FIG. 3, the cover assembly 10 includes a cover body 11, a boss 12 and a heat-resistant sheet 13. As shown in FIG. 4, a pressure relief hole 111 is provided on the cover body 11. FIG. 6 is a sectional view of the battery 1 shown in FIG. 5 along the section line "A-A", and FIG. 7 shows a partially enlarged view of the pressure relief hole 111 in FIG. 6. As shown in FIG. 7, the boss 12 is disposed on the top surface of the cover body 11 and surrounds the outer periphery of the pressure relief hole 111. The boss 12 encloses a first region 121, that is, the first region 121 is a space enclosed by the boss 12 between the top surface of the cover body 11 and the top surface of the boss 12. In this embodiment, the height of the boss 12 is equal to the height of the first region 121. The first region 121 communicates with the pressure relief hole 111, and together with the pressure relief hole 111 constitute an accommodation space. The heat-resistant sheet 13 is disposed in the accommodation space and partially covers the pressure relief hole 111.

Preferably, as shown in FIG. 7, the heat-resistant sheet 13 is disposed in the first region 121. Further, the boss 12 is spaced apart from the edge of the pressure relief hole 111, and the heat-resistant sheet 13 is fixed to a part of the cover body 1 surrounded by the boss 12, that is, the inner diameter of the pressure relief hole 111 is smaller than the inner diameter of the boss 12, and the cover body 11 protrudes toward the inner side wall 122 and a portion thereof beyond the inner side wall 122 forms an inner edge 112, while the heat-resistant sheet 13 is disposed on the inner edge 112, that is, the heat-resistant sheet 13 is disposed above the cover body 11 and on the inner side of the boss 12. Those skilled in the art can make configuration according to actual needs. The heat-resistant sheet 13 is pasted and fixed on the cover body 11.

Further, in FIG. 7, the distance a between an edge of the pressure relief hole 111 and the boss 12 is in the range of 1 mm to 5 mm. For example, the distance a between the edge of the pressure relief hole 111 and the boss 12 may be set to 1 mm, 2 mm, 2.5 mm, 3 mm, 4 mm or 5 mm. The distance a between the edge of the pressure relief hole 111 and the boss 12 is not overly large to cause the aperture of the pressure relief hole 111 to be too small, otherwise it will hinder the eruption of high-temperature gas, nor is the distance a overly small to cause the heat-resistant sheet 13 to be inconveniently disposed in the first region 121. The heat-resistant sheet 13 is set to have a sufficient contact area with the cover body 11 to better position the heat-resistant sheet 13.

In addition, as shown in FIG. 7, the boss 12 has an inner side wall 122 surrounding the outer periphery of the pressure relief hole 111, and the heat-resistant sheet 13 is spaced apart from the inner side wall 122 of the boss 12. Those skilled in the art may make configuration according to actual needs. The heat-resistant sheet 13 may also be fixed to the inner side wall 122 of the boss 12 without departing from the scope of the present disclosure.

In addition, as shown in FIG. 7, the inner side wall 122 of the boss 12 further has a position-limiting portion 123 extending toward the first region 121, and an area of the orthographic projection of the position-limiting portion 123 along the thickness direction of the cover body 11 is smaller than the area of the pressure relief hole 111, and the heat-resistant sheet 13 is located below the position-limiting portion 123. The heat-resistant sheet 13 set in this way may be stably fixed in the accommodation space and is not easily to fall, thus preventing the heat-resistant sheet 13 from rushing out of the boss 12, and the position-limiting portion 123 may press and hold the heat-resistant sheet 13, which may be set by those skilled in the art according to actual needs. It should be understood that there may be a gap between the position-limiting portion 123 and the heat-resistant sheet 13, or multiple position-limiting portions 123 may be provided at intervals to press and hold the heat-resistant sheet 13 without departing from the scope of the present disclosure. During the configuration process, the heat-resistant sheet 13 is placed in the first region 121 first. After the heat-resistant sheet 13 is pasted, the top portion of the boss 12 may be punched to form a position-limiting portion 123. Understandably, there may not be provided with a position-limiting portion.

As shown in FIG. 3 and FIG. 7, the cover assembly 10 further includes a protection film 15 disposed above the heat-resistant sheet 13, and the protection film 15 covers the region surrounded by the boss 12. The protection film 15 may be pasted on the top portion of the boss 12, or the protection film 15 may be set in the first region surrounded by the boss 12, and those skilled in the art may make the arrangement according to actual needs.

Preferably, as shown in FIG. 7, the protection film 15 is fixed to the top surface of the boss 12.

As shown in FIG. 3, the cover assembly 10 may further include an explosion-proof sheet 14 disposed on the cover body 11, and the explosion-proof sheet 14 covers the pressure relief hole 111. The explosion-proof plate 14 is able to ensure the electrical safety of the battery 1, and those skilled in the art may set the arrangement according to actual needs. It should be understood that the explosion-proof plate 14 may not be set.

In addition, as shown in FIG. 3, a ventilating portion 131 is provided on the region where the heat-resistant sheet 13 covers the pressure relief hole 111. The ventilating portion 131 may be set as a hole or a split, and may be in the shape of a cross, a circle, or a square as shown in the figure, and the ventilating portion 131 only needs to realize air ventilation without departing from the scope of the present disclosure.

In addition, the heat-resistant sheet 13 may be set as one of glass fiber, mica, ceramic, and ceramic rubber. Those skilled in the art may make configuration according to actual needs. The heat-resistant sheet 13 may have a thickness of 0.2 mm to 1 mm, and may withstand a temperature of up to 1000 degrees Celsius.

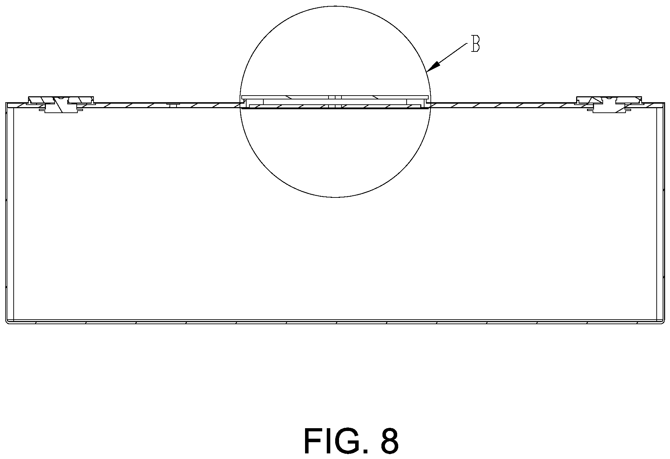

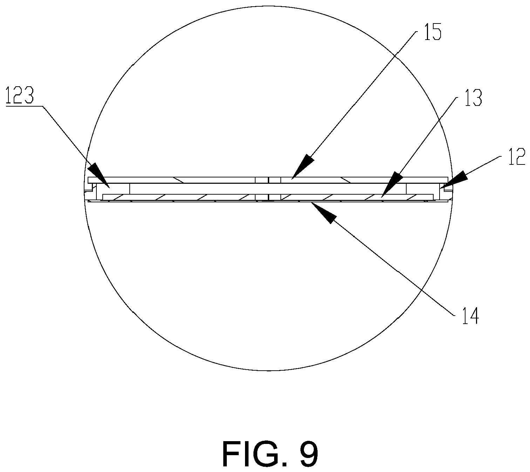

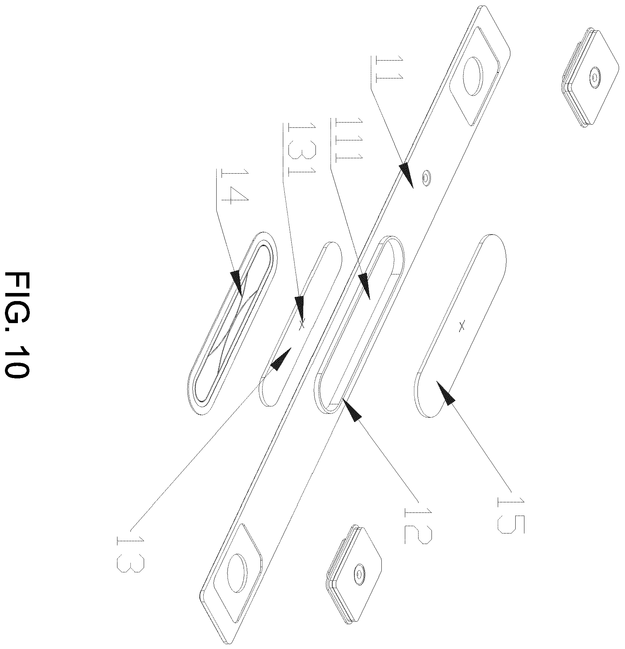

FIG. 8 shows a schematic structural view of the cover assembly 10 in another embodiment of the present disclosure, FIG. 9 shows a partially enlarged view of the pressure relief hole 111 in FIG. 8, and FIG. 10 is an exploded view of the cover assembly 10 in another embodiment of the present disclosure. As shown in FIG. 9 and FIG. 10, the bottom edge of the inner side wall 122 of the boss 12 is flush with the top edge of the inner side wall 122 of the pressure relief hole 111. That is to say, the cover body 11 penetrates through from top to bottom, and the first region surrounded by the boss 12 and the pressure relief hole 111 penetrate each other. The first region and the pressure relief hole 111 are connected as a whole, and the apertures of the first region and the pressure relief hole 111 are the same. It is shown in the figure that the heat-resistant sheet 13 is disposed in the pressure relief hole 111 of the accommodation space and covers the pressure relief hole 111.

As shown in FIG. 9 and FIG. 10, the cover assembly 10 may further include an explosion-proof sheet 14 disposed on the cover body 11, the explosion-proof sheet 14 covers the pressure relief hole 111, and the heat-resistant sheet 13 is connected to the top surface of the explosion-proof sheet 14. That is, the heat-resistant sheet 13 is fixed to the explosion-proof sheet 14, so as to be pasted on the explosion-proof sheet, and the explosion-proof sheet 14 is fixed to the cover body 11, so the heat-resistant sheet 13 is disposed in the accommodation space. In this arrangement, the heat-resistant sheet 13 only needs to cover the region where the explosion-proof sheet 14 is located, thus reducing the use area of the heat-resistant sheet and saves cost. In this embodiment, the heat-resistant sheet 13 is only located in the pressure relief hole 111. It should be understood that the heat-resistant sheet 13 may also be configured with a thicker thickness. Under the circumstances, the heat-resistant sheet 13 is disposed in the pressure relief hole 111 set in the accommodation space and the first region 121. The heat-resistant sheet 13 may be spaced apart from the inner side wall 122 of the pressure relief hole 111, or may be connected with the inner side wall 122 of the pressure relief hole 111 without departing from the scope of the present disclosure.

In other embodiments, the cover assembly 10 may not include the explosion-proof sheet 14. Under the circumstances, the heat-resistant sheet 13 is disposed in the pressure relief hole 111, and the heat-resistant sheet 13 may be connected with the hole wall of the pressure relief hole 111, or partially in the first region 121 and connected with the inner side wall of the boss 12.

Preferably, as shown in FIG. 9, the explosion-proof sheet 14 is disposed on the bottom surface of the cover body 11, and the heat-resistant sheet 13 is disposed in the pressure relief hole 111. The explosion-proof sheet 14 may also be disposed in the pressure relief hole 111 without departing from the scope of the present disclosure.

In addition, as shown in FIG. 9, the inner side wall 122 of the boss 12 further has a position-limiting portion 123 extending toward the first region 121, and an area of the orthographic projection of the position-limiting portion 123 along the thickness direction of the cover body 11 is smaller than an area of the pressure relief hole 111, and the heat-resistant sheet 13 is clamped between the position-limiting portion 123 and the explosion-proof sheet 14. The heat-resistant sheet 13 set in this way may be stably fixed in the accommodation space and is not easily to fall off, and those skilled in the art may make the arrangement according to actual needs. During the configuration process, the heat-resistant sheet 13 may be placed in the pressure relief hole 111 first. After the heat-resistant sheet 13 is pasted, the top portion of the boss 12 may be punched to form a position-limiting portion 123. It is understandable that there may be no position-limiting portion 123.

As shown in FIG. 9 and FIG. 10, the cover assembly 10 further includes a protection film 15 disposed above the heat-resistant sheet 13, and the protection film 15 covers the region surrounded by the boss 12. The protection film 15 may be pasted on the top portion of the boss 12, or the protection film 15 may be placed in the inner hole of the boss 12, and those skilled in the art may make the arrangement according to actual needs.

In addition, as shown in FIG. 10, a ventilating portion 131 is provided on the region where the heat-resistant sheet 13 covers the pressure relief hole 111. The ventilating portion 131 may be set as a hole or a split, and may be in the shape of a cross, a circle, or a square as shown in the figure, and the ventilating portion 131 only needs to realize air ventilation without departing from the scope of the present disclosure.

## Claims

1. A cover assembly (10), **characterized by** comprising:
a cover body (11), on which a pressure relief hole (111) is disposed,
a boss (12), which is disposed on a top surface of the cover body (11) and surrounds an outer periphery of the pressure relief hole (111), wherein the boss (12) encloses a first region (121), and the first region (121) communicates with the pressure relief hole (111), and together with the pressure relief hole (111) constitute an accommodation space; and
a heat-resistant sheet (13), which is disposed in the accommodation space and at least partially covers the pressure relief hole (111).

2. The cover assembly (10) according to claim 1, **characterized in that** the heat-resistant sheet (13) is disposed in the first region (121).

3. The cover assembly (10) according to claim 2, **characterized in that** the boss (12) is spaced apart from an edge of the pressure relief hole (111), and the heat-resistant sheet (13) is fixed to a part of the cover body (11) surrounded by the boss (12).

4. The cover assembly (10) according to claim 3, **characterized in that** the boss (12) has an inner side wall (122) surrounding the outer periphery of the pressure relief hole (111), and the heat-resistant sheet (13) is spaced apart from the inner side wall (122) of the boss (12).

5. The cover assembly (10) according to claim 2, **characterized in that** the heat-resistant sheet (13) is fixed to an inner side wall (122) of the boss (12).

6. The cover assembly (10) according to claim 1, **characterized in that** an inner side wall (122) of the boss (12) further has a position-limiting portion (123) extending toward the first region (121), and an area of an orthographic projection of the position-limiting portion (123) along a thickness direction of the cover body (11) in the pressure relief hole (111) is smaller than an area of the pressure relief hole (111), and the heat-resistant sheet (13) is located below the position-limiting portion (123).

7. The cover assembly (10) according to claim 1, **characterized in that** at least a part of the heat-resistant sheet (13) is located in the pressure relief hole (111).

8. The cover assembly (10) according to claim 7, **characterized in that** the cover assembly (10) further comprises: an explosion-proof sheet (14) disposed on the cover body (11), and the explosion-proof sheet (14) covers the pressure relief hole (111), the heat-resistant sheet (14) is connected with a top surface of the explosion-proof sheet (14).

9. The cover assembly (10) according to claim 8, **characterized in that** the explosion-proof sheet (14) is disposed on a bottom surface of the cover body (11), and the heat-resistant sheet (13) is disposed in the pressure relief hole (111).

10. The cover assembly (10) according to claim 8, **characterized in that** an inner side wall (122) of the boss (12) further has a position-limiting portion (123) extending toward the first region (121), and an area of an orthographic projection of the position-limiting portion (123) along a thickness direction of the cover body (11) in the pressure relief hole (111) is smaller than an area of the pressure relief hole (111), the heat-resistant sheet (13) is clamped between the position-limiting portion (123) and the explosion-proof sheet (14).

11. The cover assembly (10) according to claim 1, **characterized in that** the cover assembly (10) further comprises: a protection film (15), wherein the protection film (15) is disposed above the heat-resistant sheet (13), and the protection film (15) covers a region surrounded by the boss (12).

12. The cover assembly (10) according to claim 1, **characterized in that** a region where the heat-resistant sheet (13) covers the pressure relief hole (111) is further provided with a ventilating portion (131).

13. The cover assembly (10) according to claim 1, **characterized in that** the heat-resistant sheet (13) is one of glass fiber, mica, ceramic and ceramic rubber.

14. A battery (1), **characterized by** comprising:
the cover assembly (10) according to any one of claims 1 to 13;
a housing (20) having an opening (21) closed by the cover assembly (10); and
a battery cell which is disposed in the housing (20).

15. An electronic device, **characterized by** comprising the battery (1) according to claim 14.
